# EUROPÄISCHE PATENTSCHRIFT

(11) **EP 1 548 144 B1**
(45) Veröffentlichungstag und Bekanntmachung des Hinweises auf die Patenterteilung: **10.02.2010**
(21) Anmeldenummer: 04405716.4
(22) Anmeldetag: 18.11.2004
(51) Int. Cl.: C23C 4/10

(54) **Strömungsmaschine mit einer keramischen Anstreifschicht**
Turbomachine with an abradable ceramic layer
Turbomachine avec une couche céramique de rasage

(30) Priorität: 17.12.2003 EP 03405900
(43) Veröffentlichungstag der Anmeldung: 29.06.2005
(73) Patentinhaber: Sulzer Metco (US) Inc., Westbury, NY 11590 (US)
(72) Erfinder: Wilson, Scott, 8404 Winterthur (CH); Kaiser, Andreas Franz-Josef, 4000 Roskilde (DK)
(74) Vertreter: Sulzer Management AG

(56) Entgegenhaltungen:
- EP-A- 0 425 827
- DE-A- 10 200 803
- DATABASE WPI Section Ch, Week 199220 Derwent Publications Ltd., London, GB; Class M13, AN 1992-165043 XP002278732 & SU 1 666 571 A (KUIB AVIATION INST) 30 July 1991 (1991-07-30)

## Beschreibung

Die Erfindung betrifft eine Strömungsmaschine mit einer keramischen Anstreifschicht sowie Verfahren zum Herstellen von für die Anstreifschicht verwendbaren Werkstoffen.

Bei Strömungsmaschinen wie Flugzeugtriebwerken, stationären Gasturbinen, Turbokompressoren und Pumpen ist es für einen hohen Wirkungsgrad erforderlich, dass an der Peripherie eines Laufschaufeln tragenden Rotors ein Dichtspalt (engl. "clearance") zwischen Schaufelspitzen und Gehäuse während des Betriebs sehr eng ist. Unter Verwendung einer Anstreifschicht (engl. "abradable") auf der inneren Oberfläche des Gehäuses, über die sich die Spitzen der Laufschaufeln bewegen, gelingt es, einen minimalen Dichtspalt herzustellen, ohne dass dabei die Schaufelspitzen beschädigt werden. Für hohe Betriebstemperaturen, die über 800°C liegen, müssen die Anstreifschichten aus keramischem Material hergestellt werden. Dieses kann mittels thermischen Spritzverfahren, Flammspritzen oder atmosphärischem Plasmaspritzen (APS), aufgebracht werden. Durch Beimischen einer ausbrennbaren Phase (Polymerpulver) zu einem keramischen Spritzpulver lässt sich eine Porosität und damit eine Bröckligkeit (engl. "friability") der Anstreifschicht erzeugen. Dank dieser Bröckligkeit werden durch die Schaufelspitzen des drehenden Rotors feine Partikel aus der Oberfläche der Anstreifschicht freigesetzt.

Aus der EP-A- 1 111 195 (= P.7006) und der EP-A- 0 935 009 (= P.6861) sind Anstreifschichten bekannt, die als profilierte Oberflächen ausgebildet sind. Es werden auch keramische Anstreifschichten mit nichtprofilierter Oberfläche verwendet. Bei diesen müssen die Schaufelspitzen üblicherweise gepanzert sein, damit sie beim Anstreifen nicht beschädigt werden. (Eine Panzerung kann beispielsweise durch Laser-Umschmelzen bei gleichzeitiger Zugabe von Hartpartikeln hergestellt werden.) Freigesetzte Abriebpartikel müssen ohne wesentlichen Widerstand aus dem Dichtspalt entweichen können. Bei einer Anstreifschicht mit geeignet profilierter Oberfläche kann auf eine Panzerung der Schaufelspitzen verzichtet werden, da Abriebpartikel aus dem Dichtspalt ohne schädigende Wirkung entweichen.

Aufgabe der Erfindung ist es, eine Strömungsmaschine mit einer keramischen Anstreifschicht für hohe Betriebstemperaturen von rund 1200°C zu schaffen, bei der für die Anstreifschicht einerseits keine Profilierung der Oberfläche vorliegen muss und andererseits eine Panzerung der Schaufelspitzen möglichst nicht erforderlich ist. Diese Aufgabe wird durch die im Anspruch 1 definierte Strömungsmaschine gelöst.

Die Strömungsmaschine ist mit einer Anstreifschicht aus einem Teilchenverbundwerkstoff ausgestattet. Dieser sogenannte Komposit enthält Grundkorn-Partikel aus keramischem Material. Die Oberflächen der Grundkorn-Partikel tragen funktionale Schichten, die eine bei hoher Betriebstemperatur stabile Intermediärphase des Komposits bilden. Die Intermediärphase ist dabei zumindest teilweise durch eine chemische Reaktion aus einem Vorgängerstoff und Material der Grundkorn-Partikel an den Partikeloberflächen in-situ erzeugt worden. Durch die Intermediärphase sind Verbindungen zwischen den in einem porösen Verbund angeordneten Grundkorn-Partikeln gebildet. Diese Verbindungen weisen eine für Anstreifschichten charakteristische Aufbrechbarkeit auf.

Hohe Betriebstemperaturen können Struktur verdichtende Umwandlungen zur Folge haben, die auch bei keramischen Wärmedämmschichten, den sogenannten TBC ("Thermal Barrier Coating"), zu beobachten sind. Durch das Einlagern von Stoffen in die Struktur, die hemmend auf eine Sinteraktivität einwirken, kann erreicht werden, dass eine Porosität erhalten bleibt. Bei den TBC verbessert die Porosität die Wärmedämmung. Bei den Anstreifschichten bleibt dank der Porosität die Bröckligkeit erhalten. Es können daher solche für TBC geeignete, ein Sintern hemmende Stoffe verwendet werden, beispielsweise Pyrochlorverbindungen (siehe DE-A- 102 00 803).

Die abhängigen Ansprüche 2 bis 5 betreffen vorteilhafte Ausführungsformen der erfindungsgemässen Strömungsmaschine. Die Ansprüche 6 und 7 beziehen sich auf Verfahren zum Herstellen eines Werkstoffs für die keramische Anstreifschicht, die für die erfindungsgemässe Strömungsmaschine vorgesehen ist.

Nachfolgend wird die Erfindung anhand der Zeichnungen erläutert. Es zeigen:
- Fig. 1: ausschnittsweise eine Anstreifschicht einer erfindungsgemässen Strömungsmaschine, mit einer über der Schicht bewegten Schaufelspitze, und
- Fig. 2: eine Illustration zur porösen Struktur der Anstreifschicht.

Die in den beiden Figuren ausschnittsweise dargestellte Anstreifschicht 10 besteht aus einem Teilchenverbundwerkstoff 1, der kurz als Komposit 1 bezeichnet wird. Dieser Komposit 1 enthält Grundkorn-Partikel 2 aus keramischem Material 21. Als Grundkorn-Partikel 2 können Schleifkörner beispielsweise aus einem synthetischen Korund verwendet werden, wobei diese Schleifkörner grösser als 50 und kleiner als 200 µm sind und vorzugsweise mittlere Durchmesser mit Werten im Bereich von rund 90 bis 130 µm haben. Die Oberflächen 20 der Grundkorn-Partikel 2 tragen funktionale Schichten 22, die bei einer hohen Betriebstemperatur eine stabile Intermediärphase des Komposits 1 bilden. Die Intermediärphase ist zumindest teilweise durch eine chemische Reaktion aus einem Vorgängerstoff 22' und Material 21 der Grundkorn-Partikel 2 an den Partikeloberflächen 20 in-situ erzeugt worden.

Durch die Intermediärphase sind Verbindungen 23 zwischen den in einem porösen Verbund (Poren 4) angeordneten Grundkorn-Partikeln 2 gebildet; diese Verbindungen weisen eine für Anstreifschichten charakteristische Aufbrechbarkeit auf. Wird eine Schaufelspitze 5, die in Richtung des Pfeils 6 bewegt wird, streifend über die Anstreifschicht geführt, so werden Grundkorn-Partikel 2' von der Oberfläche 100 weggebrochen, wobei ein Abschälen einer Randzone (strichpunktiert gezeichnete Partikel 2') in der Regel über mehrere Durchläufe stattfindet.

Das keramische Material 21 der Grundkorn-Partikel 2 besteht bei einem vorteilhaften Beispiel weitgehend aus Aluminiumoxid Al₂O₃ (Korund), und die Schichten 22 aus einem Spinell MeAl₂O₄ - mit Me = Ni, Mg, Mn oder La. Es genügt, wenn zumindest in einer nicht dargestellten Schicht an der Oberfläche 20 als Hauptbestandteil - mehr als 50 Vol-% - Aluminiumoxid Al₂O₃ enthalten ist. Die durch den Spinell gebildete Intermediärphase ist durch den Vorgängerstoff 22', der ein Oxid des Metalls Me ist, und Aluminiumoxid in-situ an den Partikeloberflächen 20 erzeugt worden. Der Spinell ist ein das Sintern hemmender Stoff. Er bildet daher eine bei hoher Betriebstemperatur stabile Intermediärphase des Komposits 1.

Anstelle des Spinells können auch andere, ein Sintern hemmende Stoffe verwendet werden, wie sie von den TBC her bekannt sind. Es sind oben bereits die Pyrochlorverbindungen (DE-A- 102 00 803) genannt worden. Eine Pyrochlorverbindung ist beispielsweise Lanthan-Zirkonat La₂Zr₂O₇, ein keramisches Material mit Pyrochlor-Struktur (siehe auch US-A- 6 117 560). Die Pyrochlor-Struktur ist im Speziellen durch die Formel A₂B₂O₇ gegeben, wobei A und B Elemente sind, die in einer kationischen Form Aⁿ⁺ bzw. B^{m+} vorliegen und für deren Ladungen n+ und m+ die Wertepaare (n, m) = (3, 4) oder (2, 5) gelten. Allgemeiner lautet die Formel für die Pyrochlor-Struktur A₂₋ₓB₂₊ₓO_{7-y}, wobei x und y positive Zahlen sind, die verglichen mit 1 klein sind. Für A und B sind folgende chemische Elemente wählbar:
A = La, Ce, Pr, Nd, Sm, Eu, Gd, Tb, Dy, Ho, Er, Tm, Yb oder eine Mischung dieser chemischen Elemente und
B = Zr, Hf, Ti.

Die Grundkorn-Partikel 2 werden mit Vorteil mittels einem sogenannten "Aerocoating-Verfahren" mit dem Vorgängerstoff 22' beschichtet. Bei diesem Verfahren werden die Partikel 2 fluidisiert und durch einen Ringspalt an der Basis eines Mischrohrs mit einem Luftstrom angesaugt, wobei sie durch das Rohr gegen die Schwerkraft in eine grossen Kammer gefördert werden, aus der sie wieder zurück in eine Fluidisierungszone fallen. Aus dieser Zone gelangen die Partikel 2 wieder in das Mischrohr, in das zusätzlich mittels einer Sprühdüse eine Suspension des Beschichtungsmaterials 22' als sehr feine Tröpfchen eingespritzt wird. Die Tröpfchen setzen sich bei einem Mischen im Mischrohr auf den Partikeln 2 ab. Während des Flugs durch die grosse Kammer trocknen die beschichteten Partikel 2. Die Luft, die ein Fördern und Trocknen der Partikel 2 bewirkt, lässt man am Kopf der Kammer getrennt von den behandelten Partikeln 2 entweichen. Diese können den beschriebenen Beschichtungsvorgang mehrfach durchlaufen. In der Regel lässt sich nicht vermeiden, dass beim Beschichten ein Teil der Partikel 2 sich zu Agglomeraten zusammen ballen. Mit Vorteil entfernt man solche Agglomerate beispielsweise durch Sieben. Einrichtungen, mit denen das "Aerocoating-Verfahren" durchführbar sind, bietet die US-Firma Aeromatic-Fielder Division Niro Inc. an.

Mit dem "Aerocoating-Verfahren" können auch mehrlagige Beschichtungen aufgebracht werden, mit Einzelschichten, die aus verschiedenen Stoffen bestehen. So kann man beispielsweise auf ein Grundkorn-Partikel 2, das nicht aus Aluminiumoxid besteht oder solches nicht enthält, eine erste Schicht aus diesem Stoff auftragen. Dieses so beschichtete Grundkorn-Partikel 2 hat dann eine für das erfindungsgemässe Verfahren erforderliche Stoffeigenschaft. Selbstverständlich muss das Kernmaterial eines solchen heterogenen Grundkorn-Partikels 2 eine in Bezug auf die Betriebstemperatur notwendige thermische Stabilität aufweisen.

Die Intermediärphase kann auch aus einem Gemisch von Vorgängerstoff 22' und keramischem Material 21 hergestellt werden, wobei der Vorgängerstoff 22' und das keramische Material 21, insbesondere Aluminiumoxid, aus feinkörnigen Partikeln bestehen, deren Durchmesser kleiner als 1 µm sind. Dieses Beschichtungsmaterial wird zusammen mit Wasser und Hilfsstoffen zu der für das "Aerocoating-Verfahren" benötigten Suspension aufbereitet. Das zusätzliche Aluminiumoxid ist für eine beschleunigte Ausbildung des Spinells geeignet. Gleichzeitig werden durch das zusätzliche Aluminiumoxid auch die Verbindungen zwischen den Grundkorn-Partikeln 2 verbessert.

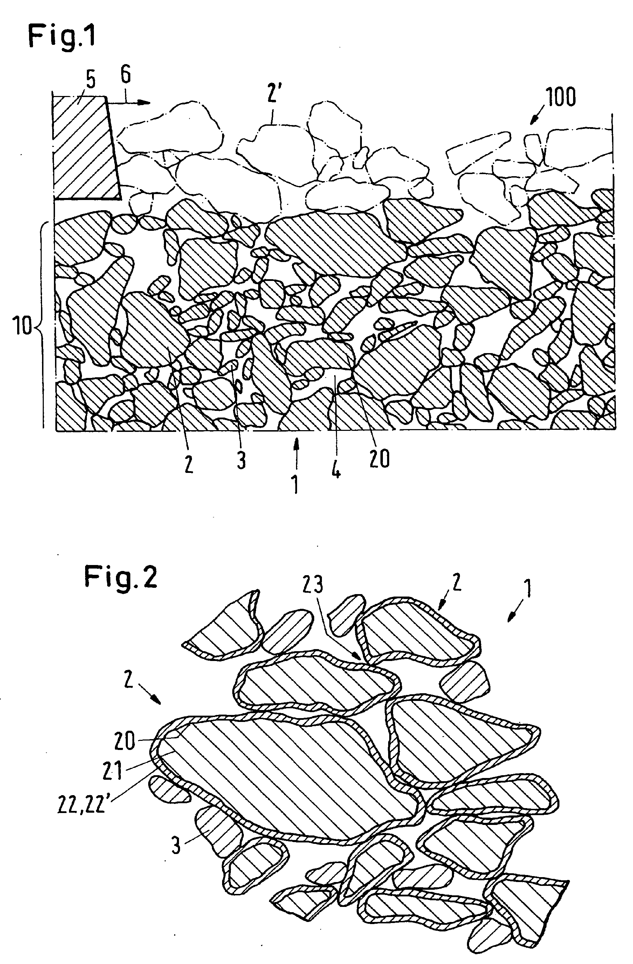

Wie in Fig. 2 dargestellt, können auch unbeschichtete Partikel 3 in den Komposit 1 eingelagert werden. Wird im Fall der Paarung von Aluminiumoxid mit Spinell für das Material der Partikel 3 ebenfalls Aluminiumoxid gewählt, so tragen diese Partikel 3 zu verbesserten Verbindungen 23 zwischen den Grundkorn-Partikeln 2 bei.

Der Werkstoff für die in einer erfindungsgemässen Strömungsmaschine eingesetzten Anstreifschicht wird schrittweise hergestellt. Die Verfahrensschritte sind beispielsweise:
a) Erzeugen eines zerstäubbaren oder versprühbaren Gemisches in Form eines Schlickers oder einer Suspension, in der feinkörnige Partikel des Vorgängerstoffs 22' dispergiert sind;
b) Beschichten der Grundkorn-Partikel 2 durch Aufbringen des genannten Gemisches und anschliessendes Trocknen der Partikel 2;
c) Calcinieren der beschichteten Grundkorn-Partikel 2 bei einer Temperatur, bei der an den Oberflächen aus Vorgängerstoff 22' und Material des Grundkorn-Partikels 21 in-situ die Intermediärphase ausgebildet wird (und ausserdem Hilfsstoffe der Suspension thermisch eliminiert werden); und
d) Sintern der calcinierten Grundkorn-Partikel 2, insbesondere bei einer Temperatur zwischen 1200 und 1500°C, wenn NiO zur Herstellung von Spinell verwendet wird, wobei das Sintern bei und/oder nach einem thermischen Spritzen der Anstreifschicht stattfinden kann.

Beim Schritt a) lassen sich die feinkörnigen Partikel vermischt mit einem Lösungsmittel, vorzugsweise Wasser, unter Verwendung einer Reibmühle, insbesondere einer Rührwerkskugelmühle, erzeugen. Dabei werden die Feinstpartikel im Lösungsmittel - ohne eine Ausbildung von Agglomeraten - dispergiert gehalten. Diese Feinstpartikel müssen genügend klein sein, so dass die Grundkorn-Partikel 2 (Grösse 40-120 µm) noch effektiv beschichtet werden können. Ausserdem sollen die Feinstpartikel im anschliessenden Calcinationsschritt sinteraktiv sein, d.h. bei einer möglichst niedrigen Temperaturen eine Bindung der Beschichtung zum Material 21 des Grundkorn-Partikels 2 ermöglichen.

Anschliessend an den Schritt c) und anstelle des Schrittes d) können auch folgende drei Schritte ausgeführt werden:
d') Vermengen der calcinierten Partikel mit einem feinen Al₂O₃-Pulver, und durch Pressen portionenweises Verfestigen des Gemenges zu Grünlingen;
e) Sintern der Grünlinge, insbesondere bei einer Temperatur zwischen 1200 und 1500°C, wenn NiO zur Herstellung des Spinells verwendet wird; und
f) Umformen des gesinterten Produkts zu einem Endprodukt, indem durch Brechen ein granulatförmiges Spritzpulver erzeugt wird, das für ein thermisches Spritzverfahren verwendbar ist.

Es ist auch folgende Alternative des Verfahrens möglich:
a) Beschichten der Grundkorn-Partikel 2 durch Aufbringen von metallischen Hüllen durch ein elektrochemisches, chemisches oder physikalisches Verfahren (CVD oder PVD), wobei das Metall der Hülle in oxidierter Form den Vorgängerstoff 22' der Intermediärphase bildet;
b) Oxidieren des Metalls der Hüllen zur Ausbildung des Vorgängerstoffs 22', wobei anschliessend mittels einer Behandlung bei erhöhter Temperatur die Intermediärphase zumindest teilweise erzeugt werden kann;
c) Sintern der beschichteten Grundkorn-Partikel 2, insbesondere bei einer Temperatur zwischen 1200 und 1500°C, wenn NiO zur Herstellung des Spinells verwendet wird, wobei das Sintern bei und/oder nach einem thermischen Spritzen der Anstreifschicht stattfinden kann.

Zum Herstellen der Anstreifschicht auf einem Substrat - z. B. auf einer inneren Oberfläche des Gehäuses der erfindungsgemässen Strömungsmaschine - können die beschichteten Grundkorn-Partikel 2 mittels einem thermischen Spritzverfahren, beispielsweise mittels Flammspritzen oder APS ("Atmospheric Plasma Spraying"), aufgebracht werden. Um eine hohe Porosität der Anstreifschicht zu erhalten, beschichtet man vorteilhafterweise mittels Flammspritzen, da bei diesem Verfahren die Partikel 2 mit einer wesentlich kleineren kinetischen Energie (Faktor 0.1 bis 0.01) als beim APS-Verfahren auf dem Substrat auftreffen. Die Ausbildung der Intermediärphase kann sich durch die thermische Einwirkung beim Flammspritzen ergeben. Anstelle eines Spritzpulvers, das aus losen Partikeln 2 zusammengesetzt ist, lässt auch ein Granulat beim thermischen Spritzverfahren verwenden, wobei die einzelnen Granulatpartikel jeweils aus einer Vielzahl von Grundkorn-Partikeln 2, dabei die Struktur des Komposits 1 bildend, zusammen gesintert sind.

In der erfindungsgemässen Strömungsmaschine können Schaufelspitzen eines Rotors ungepanzert sein. Sie können auch eine Beschichtung tragen, deren Schmelzpunkt mindestens 100 K über jenem der Intermediärphase liegt. Bei einem ausreichend hohen Schmelzpunkt wird beim Reibkontakt mit der Anstreifschicht praktisch kein Material von der Schaufelspitze entfernt, sondern nur von der Anstreifschicht.

Als keramisches Material 21 für die Grundkorn-Partikel lässt sich auch teil- oder vollstabilisiertes Zirkoniumoxid (YSZ) verwenden. Weitere Beispiele für das Beschichtungsmaterial sind: La₂O₃, MgO, Mullite (3Al₂O₃·2SiO₂) und Perowskite.

Die mit den erfindungsgemässen Verfahren hergestellten Werkstoffe lassen sich auch als Material für Wärmedämmschichten TBC verwenden. Da ein TBC eine andere Funktion als eine Anstreifschicht hat und grösseren Temperaturgradienten ausgesetzt wird, ist allerdings der für Anstreifschichten vorgesehene Werkstoff in der Regel nicht optimal ausgebildet hinsichtlich einer Verwendung für TBC.

## Patentansprüche

1. Strömungsmaschine mit einer Anstreifschicht (10) aus einem Teilchenverbundwerkstoff, einem sogenannten Komposit (1), der Grundkorn-Partikel (2) aus keramischem Material enthält, deren Oberflächen (20) funktionale Schichten (22) tragen, wobei diese Schichten eine bei hoher Betriebstemperatur stabile Intermediärphase des Komposits bilden, die Intermediärphase zumindest teilweise durch eine chemische Reaktion aus einem Vorgängerstoff (22') und Material (21) der Grundkorn-Partikel an den Partikeloberflächen (20) in-situ erzeugt ist, durch die Intermediärphase Verbindungen (23) zwischen den in einem porösen Verbund angeordneten Grundkorn-Partikeln gebildet sind und diese Verbindungen eine für Anstreifschichten charakteristische Aufbrechbarkeit aufweisen,
**dadurch gekennzeichnet, dass** das Grundkorn-Partikel (2) zumindest in einer Schicht an seiner Oberfläche (20) als Hauptbestandteil - mehr als 50 Vol-% - Aluminiumoxid Al₂O₃ enthält und dass die Intermediärphase ein Spinell MeAl₂O₄ enthält, mit Me = Ni, Mg, Mn oder La, wobei der Vorgängerstoff (22') ein Oxid des Metalls Me enthält und der Spinell zumindest teilweise aus Al₂O₃ und dem Metalloxid als Reaktionsprodukt der genannten Reaktion entstanden ist.

2. Strömungsmaschine nach Anspruch 1, **dadurch gekennzeichnet, dass** als Grundkorn-Partikel (2) Schleifkörner, beispielsweise aus einem synthetischen Korund erzeugte, verwendet sind und die Schleifkörner grösser als 50 und kleiner als 200 µm sind, wobei vorzugsweise die Durchmesser der Grundkorn-Partikel Werte im Bereich von rund 90 bis 130 µm haben.

3. Strömungsmaschine nach Anspruch 1 oder 2, **dadurch gekennzeichnet, dass** die Grundkorn-Partikel (2) vor einer Ausbildung des Komposits (1) mit einem Gemisch von Vorgängerstoff (22') und keramischem Material (21) beschichtet sind, wobei der Vorgängerstoff und das keramische Material aus feinkörnigen Partikeln bestehen, deren Durchmesser kleiner als 1 µm sind.

4. Strömungsmaschine nach einem der Ansprüche 1 bis 3, **dadurch gekennzeichnet, dass** die beschichteten Grundkorn-Partikel (2) oder ein aus dem Komposit (1) bestehendes Granulat mittels einem thermischen Spritzverfahren, mittels APS oder vorzugsweise mittels Flammspritzen, aufgebracht ist.

5. Strömungsmaschine nach einem der Ansprüche 1 bis 4, **dadurch gekennzeichnet, dass** Schaufelspitzen (5) eines Rotors ungepanzert sind oder eine Beschichtung tragen, deren Schmelzpunkt mindestens 100 K über jenem der Intermediärphase liegt.

6. Verfahren zum Herstellen eines Werkstoffs für eine keramische Anstreifschicht in einer Strömungsmaschine gemäss einem der Ansprüche 1 bis 5, folgende Schritte umfassend:
a) Erzeugen eines zerstäubbaren oder versprühbaren Gemisches in Form eines Schlickers oder einer Suspension, in der feinkörnige Partikel des Vorgängerstoffs dispergiert sind, wobei die feinkörnigen Partikel unter Verwendung einer Reibmühle oder Rührwerkskugelmühle in Wasser oder einem andern Lösungsmittel, erzeugt und die Feinstpartikel in diesem Lösungsmittel dispergiert gehalten werden,
b) Beschichten der Grundkorn-Partikel durch Aufbringen des genannten Gemisches und anschliessendes Trocknen der Partikel;
c) Calcinieren der beschichteten Grundkorn-Partikel bei einer Temperatur, bei der an den Oberflächen aus Vorgängerstoff und Material des Grundkorn-Partikels in-situ die Intermediärphase ausgebildet wird; und
d) Sintern der calcinierten Grundkorn-Partikel, insbesondere bei einer Temperatur zwischen 1200 und 1500°C, wenn NiO zur Herstellung von Spinell verwendet wird, wobei das Sintern bei und/oder nach einem thermischen Spritzen der Anstreifschicht stattfinden kann.

7. Verfahren nach Anspruch 6, **dadurch gekennzeichnet, dass** beim Schritt b) die Grundkorn-Partikel in einem fluidisierten Zustand besprüht, d.h. in einem sogenannten Aerocoating-Verfahren, beschichtet werden.

## Claims

1. A flow machine with an abradable (10) made from a particle composite material, a so-called composite (1) which contains granular core particles (2) of ceramic material whose surfaces (20) carry functional layers (22), wherein these layers form an intermediate phase of the composite which is stable at a high operating temperature, the intermediate phase is produced in situ on the particle surfaces (20) at least in part by a chemical reaction of a precursor material (22') and material (21) of the granular core particles, wherein bonds (23) are formed between the granular core particles arranged in a porous composite by the intermediate phase and these bonds have a breaking characteristic of abradables,
**characterised in that** the granular core particle (2) contains, at least in a layer at its surface (20), aluminium oxide Al₂O₃ as a main component - more than 50 volume percent; and **in that** the intermediate phase contains a spinel MeAl₂O₃, where Me = Ni, Mg, Mn or La, with the precursor material (22') containing an oxide of the metal Me and the spinel is produced at least in part from Al₂O₃ and from the metal oxide as the reaction product of the named reaction.

2. A flow machine in accordance with claim 1, **characterised in that** grinding grains, for example from a synthetic corundum, are used as the granular core particles (2) and the grinding grains are larger than 50 and smaller than 200 µm, with the diameters of the granular core particles preferably having values in the range from approximately 90 to 130 µm.

3. A flow machine in accordance with one of the claims 1 to 2, **characterised in that** the granular core particles (2) are coated with a mixture of precursor material (22') and ceramic material (21) prior to a formation of the composite (1), with the precursor material and the ceramic material being made of fine grain particles whose diameters are smaller than 1 µm.

4. A flow machine in accordance with one of the claims 1 to 3, **characterised in that** the coated granular core particles (2) or a granulate being made of the composite (1) is applied by means of a thermal spraying process, by means of APS or preferably by means of flame spraying.

5. A flow machine in accordance with any one of the claims 1 to 4, **characterised in that** vane tips (5) of a rotor are unarmoured or carry a coating whose melting point lies at least 100 K above that of the intermediate phase.

6. A method for the manufacture of a material for a ceramic abradable in a flow machine in accordance with any one of the claims 1 to 5, including the following steps:
a) producing an atomisable or sprayable mixture in the form of a slip or of a suspension in which fine-grain particles of the precursor material are dispersed, wherein the fine grain particles are produced using a friction mill or an agitating ball mill in water or in another solvent, and the very fine particles are kept dispersed in this solvent;;
b) coating of the granular core particles by application of the said mixture and subsequent drying of the particles;
c) calcining the coated granular core particles at a temperature at which the intermediate phase is formed in situ at the surfaces of precursor material and material of the granular core particle; and
d) sintering of the calcined granular core particles, in particular at a temperature between 1200 and 1500°C, when NiO is used for the manufacture of spinel, with the sintering being able to take place at and/or after a thermal spraying of the abradable.

7. A method in accordance with claim 6, **characterised in that**, in step b), the granular core particles are sprayed in a fluidised state, i.e. are coated in a so-called aerocoating method.

## Revendications

1. Turbomachine comportant une couche abradable (10) en matériau composite à particules, à savoir un composite (1) qui contient des particules granulaires de base (2) en matériau céramique, dont les surfaces (20) portent des couches (22) fonctionnelles, lesdites couches formant une phase intermédiaire, stable en présence d'une température de service élevée, du composite, la phase intermédiaire étant générée in situ, en moins en partie, par une réaction chimique à partir d'un précurseur (22') et d'un matériau (21) des particules granulaires de base sur les surfaces (20) des particules, des liaisons (23) étant formées par la phase intermédiaire entre les particules granulaires de base, agencées dans un composite poreux, et lesdites liaisons possèdent une possibilité de déchirement caractéristique des couches abradables, **caractérisée en ce que** la particule granulaire de base (2) contient, au moins dans une couche sur sa surface (20), de l'oxyde d'aluminium Al₂O₃ - plus de 50% en volume - en tant que composant principal, et **en ce que** la phase intermédiaire contient un spinelle MeAl₂O₄, avec Me = Ni, Mg, Mn ou La, le précurseur (22') contenant un oxyde du métal Me et le spinelle étant obtenu en moins en partie à partir de Al₂O₃ et de l'oxyde de métal en tant que produit de réaction de ladite réaction.

2. Turbomachine selon la revendication 1, **caractérisée en ce que** les particules granulaires de base (2) utilisées sont des grains abrasifs, générés par exemple à partir d'un corindon synthétique, et les grains abrasifs sont supérieurs à 50 µm et inférieurs à 200 µm, les diamètres des particules granulaires de base ayant de préférence des valeurs dans la plage de 90 à 130 µm environ.

3. Turbomachine selon la revendication 1 ou 2, **caractérisée en ce que** les particules granulaires de base (2), avant une formation du composite (1), sont revêtues d'un mélange de précurseur (22') et de matériau céramique (21), le précurseur et le matériau céramique étant formé par des particules à grains fins, dont le diamètre est inférieur à 1 µm.

4. Turbomachine selon l'une quelconque des revendications 1 à 3, **caractérisée en ce que** les particules granulaires de base (2) revêtues ou un granulat formé à partir du composite (1) sont déposés par un procédé de projection thermique, par projection plasma sous pression atmosphérique (APS) ou, de préférence, par projection à la flamme.

5. Turbomachine selon l'une quelconque des revendications 1 à 4, **caractérisée en ce que** les pointes (5) des aubes d'un rotor ne sont pas blindées ou portent un revêtement dont le point de fusion se situe au moins 100 K au-dessus de la phase intermédiaire concernée.

6. Procédé de réalisation d'un matériau pour une couche abradable céramique dans une turbomachine selon l'une quelconque des revendications 1 à 5, comportant les étapes suivantes:
a) production d'un mélange apte à être atomisé ou pulvérisé sous la forme d'une barbotine ou d'une suspension, dans laquelle sont dispersées des particules à grains fins du précurseur, lesdites particules à grains fins étant obtenues moyennant l'utilisation d'un broyeur à friction ou d'un broyeur à boulets et mélangeur dans de l'eau ou un autre solvant, et les particules les plus fines sont maintenues à l'état dispersé dans ce solvant;
b) revêtement des particules granulaires de base par l'application dudit mélange et séchage consécutif des particules;
c) calcination des particules granulaires de base revêtues à une température à laquelle la phase intermédiaire est formée in situ sur les surfaces en précurseur et matériau de la particule granulaire de base; et
d) frittage des particules granulaires de base calcinées, en particulier à une température entre 1 200 et 1 500°C, si on utilise le NiO pour la réalisation du spinelle, le frittage se produisant pendant et/ou après une projection thermique de la couche abradable.

7. Procédé selon la revendication 6, **caractérisé en ce qu'**au cours de l'étape b), les particules granulaires de base sont aspergées à l'état fluidisé, c'est-à-dire sont revêtues pendant un procédé dit procédé Aerocoating.
